# EUROPEAN PATENT SPECIFICATION

(11) **EP 2 300 196 B1**
(45) Date of publication and mention of the grant of the patent: **27.11.2013**
(21) Application number: 09761851.6
(22) Date of filing: 08.06.2009
(51) Int. Cl.: B23P 6/00, F01L 3/22

(54) **METHOD OF RECONDITIONING A CAST IRON CYLINDER HEAD OF AN INTERNAL COMBUSTION ENGINE**
VERFAHREN ZUR REKONDITIONIERUNG EINES GUSSEISERNEN ZYLINDERKOPFS EINES VERBRENNUNGSMOTORS
PROCÉDÉ DE RÉPARATION DE CULASSE EN FONTE D'UN MOTEUR À COMBUSTION INTERNE

(30) Priority: 12.06.2008 FI 20085578
(43) Date of publication of application: 30.03.2011
(73) Proprietor: Wärtsilä Finland Oy, 65380 Vaasa (FI)
(72) Inventor: BATES, William, North Vancouver British Columbia V1G2B3 (CA)
(74) Representative: Ansala, Jyrki Matti
(86) International application number: PCT/FI2009/050485
(87) International publication number: WO 2009/150296

(56) References cited:
- EP-A- 0 416 758
- DE-A1- 19 911 618
- GB-A- 394 839
- JP-A- 8 100 701
- JP-A- 2001 182 611
- US-A- 3 593 406
- US-A- 3 830 209
- US-A- 4 967 458
- US-A1- 2007 256 763

## Description

### Technical field

The present invention relates to method of reconditioning a cast iron cylinder head of an internal combustion engine, which cylinder head comprises a cylinder head body and at least one worn valve seat fixed to the cylinder head, which method comprising follow steps in which the worn valve seat fixed to the cylinder head is removed from the cylinder head, the surface of the cylinder head is machined forming a cavity for a new insert part, and the new insert part is arranged into the cavity, the insert part is fixed to the cavity of the cylinder head by brazing and the insert part is machined to adapt the required dimensions of a new valve seat.

Such a method is known from document GB 394 839.

### Background art

Internal combustion engines operate in conditions which subjects particularly the combustion chamber under severe conditions. A significant factor which wears out the structure is the heat generated by the combustion. Other reasons for wearing are mechanical stresses and friction. Inlet and exhaust valves are arranged to a cylinder head of the engine in order to facilitate gas exchange of the cylinder. The valve is arranged in cooperation with a valve seat. Valves are opened and closed continuously synchronized the position of the piston. At closed position the valve disk is in connection with a valve seat forming a gas tight seal between them.

The valve seat in an internal combustion engine is the surface against which an Intake or an exhaust valve rests during the portion of the engine operating cycle when that valve is closed. The valve seat is a critical component of an engine in that if it is improperly positioned, oriented, or formed during manufacture, valve leakage will occur which will adversely affect the engine compression ratio and therefore the engine efficiency, performance, and engine life.

Valve seats are often formed by press-fitting an approximately cylindrical piece into a cast depression in a cylinder head, and then machining valve seat surfaces to form the valve seat into a shape that will match the mating surface of the corresponding valve.

Eventually the valve seat will be worn out and replacement is needed. However, there is a limit where the wall material has been bored to minimum allowable limit.

During normal servicing of a cylinder head, it is often necessary to re-bore the valve seat pockets to accept oversize seats. This is due to the fact that in removing old seats, the bores can become scored and can loose their accuracy of fit. However, this over-boring procedure can only be carried out a limited number of times because the thickness of the casting walls cannot be overly reduced without risk.

Once the seat pockets have reached maximum oversize, in the prior art the alternatives were to scrap the cylinder cover, or attempt to recondition by some method of welding. However, particularly cast iron is a problematic material to repair by welding due to the high percentage of free carbon that exists within the cast iron structure. Another problem with cast iron is the tendency to absorb oil and other impurities. Welding can cause a crack prone heat affected zone with residual stresses that may be prone to subsequent failure in service.

In addition to welding, brazing is known joining process whereby a nonferrous filler metal or alloy is heated to melting temperature above 425°C (800°F) and distributed between two or more close-fitting parts by capillary action. At its liquid temperature, the molten filler metal and flux, that is a substance which facilitates brazing by chemically cleaning the metals to be joined, interacts with a thin layer of the base metal, cooling to form an exceptionally strong, sealed joint due to grain structure interaction.

JP2001182611 describes a light alloy cylinder head and a method of manufacturing such a cylinder head, in which a peripheral part around an intake/exhaust port on the lower surface of the cylinder head is reinforced by brazing a reinforced member by frictional heat so as to prevent deformation of the cylinder head in process

Publication US 3,594,406 shows a method of reconstructing a worn cylinder head, in which the whole lower part of the cylinder head is replaced. This requires accurate alignment of the old and new sections which makes the method complicated to practise.

US 3,830,209 discloses a cylinder head and a method of reconstructing the cylinder head. In this publication the reconstructing is suggested to perform by providing an insert into a recess made to the lower part of the worn cylinder head. This way the surface of the cylinder head which is subjected to harsh circumstances of combustion may be replaced.

JP08100701 shows a method of manufacturing a light alloy cylinder head having valve seat of different material. In the method the valve seat is attached to the cylinder head by brazing so that the cylinder head is provided with a through into which the seat is arranged for brazing. After the brazing the inner wall of the through is machined off. This method is only suitable for manufacturing a new cylinder head, not for repairing worn cylinder heads.

It is an object of the present invention to provide a method of reconditioning a cylinder head of an internal combustion engine which results in high-quality cylinder head.

### Disclosure of the invention

Objects of the invention are met substantially as is disclosed in claim 1.

According to the invention a method of reconditioning a cast iron cylinder head of an internal combustion engine, which cylinder head comprises a cylinder head body and at least one worn valve seat fixed to the cylinder head, comprises the following steps in which
(a) the worn valve seat fixed to the cylinder head is removed from the cylinder head, and
(b) after which the surface of the cylinder head is machined forming a cavity for a new insert part,
(c) the new insert part is arranged into the cavity, and
(d) the insert part is fixed to the cavity of the cylinder head by brazing, and
(e) next the insert part is machined to adapt the required dimensions of a new valve seat.

It is characteristic to the invention, that before practicing the steps (b) to (e) the cylinder head is subjected to heat treatment practiced at temperature of 500 - 600 °C to remove hydrocarbon residues.

In the step (d) the brazing is performed in the presence of inert gas only, preferably Argon, thus preventing the oxidation of the brazed joint. According to another embodiment the brazing in the step (d) is performed in vacuum conditions. Brazing is performed at a temperature of 650 - 720°C and the brazing time at the temperature is 100 - 150 min.

The new insert part is arranged into the cavity so that a section of the insert part is extending out from the cavity. This ensures that the insert is large enough to be machined to its final dimensions. This also makes it possible to, before the brazing, coil a solder wire around the section extending out from the cavity.

The insert part is fixed with a clearance of 0,05 - 0,3 mm, preferably with a clearance of 0,1 - 0,2 mm. This has the effect of resulting in high quality joint between the surfaces.

According a preferred embodiment the heat treatment before practicing the steps (b) to (f) lasts at least 4 hours. After the heat treatment the cylinder head is cooled down slower than 100 °C / h. This step is to remove hydrocarbon residues that can adversely affect the brazing process.

The other claims present more details of different embodiments of the invention. The present invention provides a method with which the reconditioning of the cylinder head of an internal combustion engine provides strong structure with minimized warpage and distortion.

### Brief Description of Drawing

In the following, the invention will be described with reference to the accompanying schematic drawings, in which
Figure 1 illustrates a cylinder head of and internal combustion engine at a stage of the method according to the invention,
Figure 2 illustrates a cylinder head of and internal combustion engine at another stage of the method according to the invention, and
Figure 3 illustrate the effect of clearance to the strength of the joint according to the invention.

### Detailed Description of Drawing

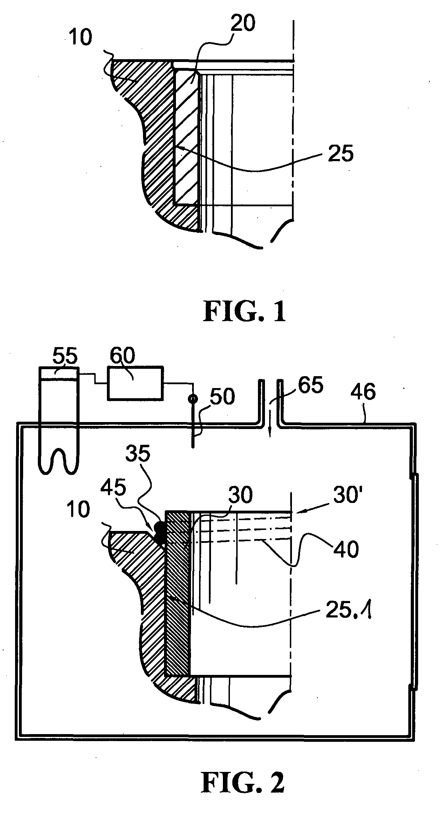

In Figure 1 there is illustrated a cut-off of a cylinder head 10 of an internal combustion engine having a worn valve seat 20 which is to be replaced.

The cavity 25 into which the valve seat has been inserted has reached a dimension which can no longer be increased without compromising the rigidity of the cylinder head 10. In practise the cavity is an extension in the inlet/outlet channel in the cylinder head. Therefore the worn valve seat is removed from the cylinder head. After that the surface of the channel and/or the surface faced the valve seat is machined forming a cavity 25.1 (Figure 2) for a new insert 30. The cavity formed is cylindrical bore extending from the face of the cylinder head into the inlet/outlet channel so that its longitudinal central axis combines with the longitudinal central axis of valve shaft. The machining is performed advantageously without using any cutting fluid of a like.

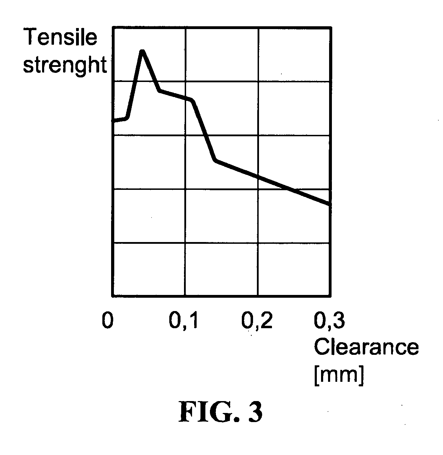

The new insert 30 is a thick walled bush, which at this stage extends out from the cavity 25.1. In practise the minimum sleeve thickness is about 6mm. In other words the length of the bush 30 is longer than the depth of the cavity. Preferably the diameter of the bush i.e. the insert 30 and the diameter of the cavity 25.1 are arranged such that the clearance between them is 0,05mm - 0,3mm, preferably 0,1mm - 0,2mm. The clearance has an effect on the strength of the brazing joint, which is explained in connection with figure 3.

Prior to arranging the insert part into the cavity the joining surfaces are coated with a flux agent, which facilitates brazing by chemically cleaning the surfaces to be joined. Preferably the bush is made of an alloy steel bush and custom fitted into the cavity. This stage is shown in the figure 2, in which the cylinder head is already in a furnace 46. A brazing agent 35, preferably a wire, is coiled 40 around the bush section 30' extending from the cavity 25.1. This ensures that the brazing agent is evenly distributed over the whole circumference of the bush. In order to make sure that the brazing agent spreads into the gap between the outer surface of the bush 30 and the inner surface of the cavity, the outer edge of the cavity is provided with a chamfer 45 being at least of the cross sectional size of the used brazing agent, such as the diameter of the wire.

The brazing is performed in a special furnace 46 where the normal atmosphere has been entirely removed and replaced with an effective vacuum or an atmosphere of inert gas such as Argon. This prevents any oxidation of the brazing agent. The brazing is performed so that cylinder head is place in the furnace filled with inert gas and the cylinder head is heated substantially slowly and evenly to the brazing temperature of 650 - 750°C, preferably 700 - 720°C. The length of the heating period is about 2 hours, e.g. 100 - 150 min, during which insert will be brazed into place. After that the furnace is slowly cooled down and the cylinder head is cleaned to remove flux residues.

The furnace 45 is provided with a control arrangement comprising a temperature probe 50 connected with a control unit 60. The control unit is provided for controlling the heating power of heater 55 of the furnace based on the temperature measured in the furnace and a set value of the temperature. The furnace is also provided with an inlet for inert gas 65 for replenishing depleted gas.

Next the insert i.e. the bush is machined to meet the dimensions of the valve seat. The valve seat thus brazed into the place is bonded with high strength and can never come out in normal service.

The present invention additionally solves the problem of corrosion and cavitation experienced in some cylinder heads, since the alloy steel bushing is more resistant to attack than the original cast iron.

The bush is bonded into the head with high strength. It is not subject to cracking and in fact the bonding joins together cast iron so that crack propagation possibilities are effectively minimized between the valve seat pocket and the water jacket. The strength of the bond may be seen in figure 3. The minimum clearance must such that the penetration of the brazing agent is not hampered and as can be seen from the figure 3 there is a maximum value of the tensile strength at about 0,4 mm which depends of course on the materials and circumstances used. Suitable range for the clearance is 0,05 - 0,3 mm. However, better results are obtained by arranging the clearance being between 0,1 - 0,2 mm.

Particularly with cast iron cylinder heads it is advantageous to perform an additional step of preheating, "baking", prior machining the cylinder head for new insert part. Particularly cast iron tends to absorb impurities and hydrocarbons during the operation of the engine. The preheating step releases the impurities such as hydrocarbons bound or soaked in the cylinder head material. Any impurity impairs the joint made by brazing and thus preheating is advantageous.

During the preheating the cylinder head is placed into a temperature controlled furnace and heated to 500 - 600°C, preferably to 550 - 570°C, and maintained at the temperature for about 4 hours. After that the cylinder head is cooled slowly in furnace, preferably not faster than 100°C/hour. This step is to remove hydrocarbon residues that can adversely affect the brazing process.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in another embodiment when technically feasible.

## Claims

1. Method of reconditioning a cast iron cylinder head (10) of an internal combustion engine, which cylinder head comprises a cylinder head body and at least one worn valve seat (20) fixed to the cylinder head (10), which method comprises the following steps in which
(a) the worn valve seat (20) fixed to the cylinder head (10) is removed from the cylinder head (10), and
(b) after which the surface of the cylinder head (10) is machined forming a cavity for a new insert part (30), and
(c) the new insert part (30) is arranged into the cavity,
(d) the insert part (30) is fixed to the cavity of the cylinder head (10) by brazing, and
(e) next the insert part (30) is machined to adapt the required dimensions of a new valve seat,
**characterized in that** before practicing the steps (b) to (e) the cylinder head (10) is subjected to heat treatment practiced at temperature of 500 - 600 °C to remove hydrocarbon residues.

2. Method according to claim 1, **characterized in that**, in the step (d) the brazing is performed in the presence of inert gas only.

3. Method according to claim 2, **characterized in that**, in the step (d) the brazing is performed in the presence of Argon.

4. Method according to claim 1, **characterized in that**, in the step (d) the brazing is performed at a temperature of 650 - 720°C.

5. Method according to claim 1, **characterized in that**, in the step (c) the new insert part is arranged into the cavity so that a section (30') of the insert part (30) is extending out from the cavity.

6. Method according to claim 5, **characterized in that**, in the step (d) the before the brazing a solder wire is coiled around the section extending out from the cavity.

7. Method according to claim 1, **characterized in that**, in the step (b) the surface is machined without using cutting fluid.

8. Method according to claim 1, **characterized in that**, in the step (d) the insert part is fixed with a clearance of 0,05 - 0,3 mm.

9. Method according to claim 8, **characterized in that**, in the step (d) the insert part (30) is fixed with a clearance of 0,1 - 0,2 mm.

10. Method according to claim 4, **characterized in that**, in the step (d) the brazing time at the temperature is 100 -150 min.

11. Method according to claim 1, **characterized in that**, the heat treatment time is at least 4 hours.

12. Method according to claim 11, **characterized in that**, after the heat treatment the cylinder head is cooled down slower than 100 °C / h.

## Patentansprüche

1. Verfahren zum Wiederinstandsetzen eines gusseisernen Zylinderkopfes (10) einer Verbrennungskraftmaschine, wobei der Zylinderkopf einen Zylinderkopfkorpus und wenigstens einen an dem Zylinderkopf (10) befestigten verschlissenen Ventilsitz (20) umfasst, wobei das Verfahren die folgenden Schritte umfasst, in denen:
(a) der an dem Zylinderkopf (10) befestigte verschlissene Ventilsitz (20) von dem Zylinderkopf (10) entfernt wird und
(b) danach die Oberfläche des Zylinderkopfes (10) spanend bearbeitet wird, wobei ein Hohlraum für einen neuen Einsatzteil (30) geformt wird, und
(c) der neue Einsatzteil (30) in dem Hohlraum angeordnet wird,
(d) der Einsatzteil (30) durch Hartlöten an dem Hohlraum des Zylinderkopfes (10) befestigt wird und
(e) der neue Einsatzteil (30) spanend bearbeitet wird, um sich an die erforderlichen Abmessungen eines neuen Ventilsitzes anzupassen,
**dadurch gekennzeichnet, dass** der Zylinderkopf (10) vor dem Ausführen der Schritte (b) bis (e) einer Wärmebehandlung unterworfen wird, die bei einer Temperatur von 500 - 600°C ausgeführt wird, um Kohlenwasserstoffreste zu entfernen.

2. Verfahren nach Anspruch 1, **dadurch gekennzeichnet, dass** in dem Schritt (d) das Hartlöten beim Vorhandensein nur von inertem Gas durchgeführt wird.

3. Verfahren nach Anspruch 2, **dadurch gekennzeichnet, dass** in dem Schritt (d) das Hartlöten beim Vorhandensein von Argon durchgeführt wird.

4. Verfahren nach Anspruch 1, **dadurch gekennzeichnet, dass** in dem Schritt (d) das Hartlöten bei einer Temperatur von 650 - 720°C durchgeführt wird.

5. Verfahren nach Anspruch 1, **dadurch gekennzeichnet, dass** in dem Schritt (c) der neue Einsatzteil so in dem Hohlraum angeordnet wird, dass sich eine Sektion (30') des Einsatzteils (30) aus dem Hohlraum heraus erstreckt.

6. Verfahren nach Anspruch 5, **dadurch gekennzeichnet, dass** in dem Schritt (d) vor dem Hartlöten ein Lötdraht um die Sektion, die sich aus dem Hohlraum heraus erstreckt, gewickelt wird.

7. Verfahren nach Anspruch 1, **dadurch gekennzeichnet, dass** in dem Schritt (b) die Oberfläche ohne die Verwendung von Schneidfluid spanend bearbeitet wird.

8. Verfahren nach Anspruch 1, **dadurch gekennzeichnet, dass** in dem Schritt (d) der Einsatzteil mit einem Spiel von 0,05 - 0,3 mm befestigt wird.

9. Verfahren nach Anspruch 8, **dadurch gekennzeichnet, dass** in dem Schritt (d) der Einsatzteil (30) mit einem Spiel von 0,1 - 0,2 mm befestigt wird.

10. Verfahren nach Anspruch 4, **dadurch gekennzeichnet, dass** in dem Schritt (d) die Hartlötzeit bei der Temperatur 100 - 150 min beträgt.

11. Verfahren nach Anspruch 1, **dadurch gekennzeichnet, dass** die Wärmebehandlungszeit wenigstens 4 Stunden beträgt.

12. Verfahren nach Anspruch 11, **dadurch gekennzeichnet, dass** der Zylinderkopf nach der Wärmebehandlungszeit langsamer als 100°C/h heruntergekühlt wird.

## Revendications

1. Procédé de reconditionnement d'une culasse en fonte (10) d'un moteur à combustion interne, laquelle culasse comprend un corps de culasse et au moins un siège de soupape usé (20) fixé à la culasse (10), lequel procédé comprend les étapes suivantes dans lesquelles :
(a) le siège de soupape usé (20) fixé à la culasse (10) est retiré de la culasse (10) et
(b) après quoi, la surface de la culasse (10) est usinée en formant une cavité pour une nouvelle pièce d'insert (30) et
(c) la nouvelle pièce d'insert (30) est agencée à l'intérieur de la cavité,
(d) la pièce d'insert (30) est fixée à la cavité de la culasse (10) par brasage, et
(e) ensuite, la pièce d'insert (30) est usinée afin de s'adapter aux dimensions requises d'un nouveau siège de soupape,
**caractérisé en ce que** avant d'effectuer les étapes (b) à (e), la culasse (10) est soumise à un traitement thermique effectué à une température de 500-600°C pour éliminer les résidus d'hydrocarbures.

2. Procédé selon la revendication 1, **caractérisé en ce que**, à l'étape (d) le brasage est effectué en présence de gaz inerte seulement.

3. Procédé selon la revendication 2, **caractérisé en ce que**, à l'étape (d) le brasage est effectué en présence d'argon.

4. Procédé selon la revendication 1, **caractérisé en ce que**, à l'étape (d) le brasage est effectué à une température de 650-720°C.

5. Procédé selon la revendication 1, **caractérisé en ce que**, à l'étape (c) la nouvelle pièce d'insert est agencée dans la cavité de sorte qu'une section (30') de la pièce d'insert (30) s'étende hors de la cavité.

6. Procédé selon la revendication 5, **caractérisé en ce que**, à l'étape (d) avant le brasage, un fil de soudure est enroué autour de la section s'étendant hors de la cavité.

7. Procédé selon la revendication 1, **caractérisé en ce que**, à l'étape (b) la surface est usinée sans utiliser de liquide de coupe.

8. Procédé selon la revendication 1, **caractérisé en ce que**, à l'étape (d) la pièce d'insert est fixée avec un dégagement de 0,05-0,3 mm.

9. Procédé selon la revendication 8, **caractérisé en ce que**, à l'étape (d) la pièce d'insert (30) est fixée avec un dégagement de 0,1-0,2 mm.

10. Procédé selon la revendication 4, **caractérisé en ce que**, à l'étape (d) le temps de brasage à la température est de 100-150 min.

11. Procédé selon la revendication 1, **caractérisé en ce que** le temps de traitement thermique est d'au moins 4 heures.

12. Procédé selon la revendication 11, **caractérisé en ce que**, après le traitement thermique la culasse est refroidie plus lentement que 100°C/h.
